Europäisches Patentamt

European Patent Office

Office européen des brevets

(19)

(11) **EP 1 468 864 A2**

## (12) EUROPEAN PATENT APPLICATION

(43) Date of publication:
**20.10.2004 Bulletin 2004/43**

(51) Int Cl.⁷: **B60L 11/18**

(21) Application number: **04008496.4**

(22) Date of filing: **07.04.2004**

(84) Designated Contracting States:
**AT BE BG CH CY CZ DE DK EE ES FI FR GB GR HU IE IT LI LU MC NL PL PT RO SE SI SK TR**
Designated Extension States:
**AL HR LT LV MK**

(30) Priority: **15.04.2003 JP 2003109837**

(71) Applicant: **ISUZU MOTORS LIMITED**
**Shinagawa-ku, Tokyo (JP)**

(72) Inventors:
 • **Kikuchi, Takeshi**
 **Fujisawa-shi Kanagawa (JP)**

 • **Uematsu, Yutaka**
 **Zama-shi Kanagawa (JP)**

(74) Representative: **Kunz, Herbert, Dr.**
 **HAMMONDS**
 **Karl-Scharnagl-Ring 7**
 **80539 München (DE)**

Remarks:
A request for correction of the description and of claim 1 has been filed pursuant to Rule 88 EPC. A decision on the request will be taken during the proceedings before the Examining Division (Guidelines for Examination in the EPO, A-V, 3.).

### (54) Vehicle power supply

(57) A vehicle power supply for a hybrid-powered electric automobile is adapted to feed power to a motor-generator or regenerate power therefrom, and the motor-generator is caused to serve to produce vehicle-driving power. The vehicle power supply of the invention includes two power supplies having an electric storage device respectively. Discharge or regeneration is controlled so that one electric storage device is always maintained in a highly charged condition and the other electric storage device is always maintained nearly in an empty condition. Thus, a margin of regeneration is always kept, so that full use can be made of the regenerative brake whenever the use of the brake is required.

Fig. 1

EP 1 468 864 A2

## Description

Field of the invention

The invention relates to a vehicle power supply for use in a hybrid-powered electric automobile.

Background of the invention

Generally, a hybrid-powered electric automobile includes an engine and a motor-generator and also includes a power supply, which feeds power to the motor-generator and regenerates power from the motor-generator. When acceleration is required, for example, at a starting time of the automobile, the power supply feeds power to the motor-generator so that the motor-generator is caused to serve as a motor and thus produces acceleration. On the other hand, when deceleration is required, for example, at a braking time of the automobiie, the motor-generator is caused to serve as a generator to produce deceleration, so that generated power is regenerated into the power supply.

Since it is required that the above-mentioned power supply be capable of feeding(or discharge) and regeneration (or charge), the power supply must first have an electric storage device (which undergoes charging and discharging in direct-current form). The power supply must also have an inverter (such as an AC/DC converter) because an AC motor-generator is used as the motor-generator.

Therefore, the hybrid-powered electric automobile is equipped with at least one set of power supply of the type including an electric storage device and an inverter. Some hybrid-powered electric automobiles are equipped with two sets of power supplies for convenience of various applications. Prior-art literatures pertaining to an automobile equipped with two sets of power supplies include Japanese Patent Application Laid-Open (JP-A) No. 09-098514, for example. This is directed to improvement in the regeneration efficiency. Besides, JP-A 2000-324871 is included in the literatures.

However, discharge or regeneration depending on a change in a running state may bring the state-of-charge of the electric storage device of the power supply close to a full charged state (state-of-charge of 100%). This situation involves a problem as given below. When the automobile goes down a long slope, the absence of a margin of regeneration makes it impossible to use a useful regenerative brake, which causes not only a deterioration in the durability of other braking devices such as a foot brake but also an impairment of safety. Moreover, this means that an opportunity for energy regeneration is helplessly missed. In other words, there exists a problem that effective use of energy is not fully performed.

On the other hand, when the electric storage device is discharged without principle to such an extent that the state-of-charge becomes very low, such a problem arises, that is, a required assistance cannot be obtained in such a situation that assist from the electric storage device is desired for driving.

Summary of the Invention

The invention of a vehicle power supply in a hybrid-powered electric automobile has many subjects.

The first subject of the invention is to be able to use a regenerative brake fully at a time of deceleration, and to be able to supply power sufficiently at a time of power feeding.

The second subject of the invention is to improve energy recovery and fuel efficiency.

The third subject of the invention is to reduce loads on the braking devices such as a foot brake, thus extending the lifetime of the braking devices.

The fourth subject of the invention is to prevent exhaust gas and reduce noise, when operating the auxiliary equipment with the vehicle stopped.

The fifth subject of the invention is to reduce the size of the electric storage device and to extend the lifetime thereof.

The sixth subject of the invention is to extend the lifetime of the power supply.

In order to solve the aforesaid subjects, it is intended that the present invention provides a vehicle power supply which feeds power to a motor-generator and an auxiliary equipment or regenerates power from the motor-generator, comprising: a first power supply having a first electric storage device and a first inverter; a second power supply having a second electric storage device and a second inverter; state-of-charge detecting means for detecting the state-of-charge of each of the first and second electric storage devices ; and controlling means for performing feeding control or regeneration control on the first and second power supplies in accordance with signals from the state-of-charge detecting means and signals on an operating status of a vehicle, wherein the regeneration control is performed such that the first power supply regenerates power for preference when the state-of-charge of the first electric storage device is less than a predetermined high state-of-charge threshold, and the second power supply regenerates power for preference when the state-of-charge of the first electric storage device is not less than the predetermined high state-of-charge threshold, and the feeding control, the second power supply feeds power for preference when the state-of-charge of the second electric storage device is not less than a predetermined low state-of-charge threshold, and the first power supply feeds power for preference when the state-of-charge of the second electric storage device is less than the predeter mined low state-of-charge threshold.

Moreover, the present invention provides a vehicle power supply which feeds power to a motor-generator and an auxiliary equipment or regenerates power from the motor-generator, comprising: a first power supply having a first electric storage device and a first inverter; a second power supply having a second electric storage device and a second inverter; state-of-charge detecting means for detecting the state-of-charge of each of the first and second electric storage devices ; and controlling means for performing feeding control or regeneration control on the first and second power supplies in accordance with signals from the state-of-charge detecting means and signals on an operating status of a vehicle, wherein the regeneration control is performed such that, the first power supply alone regenerates power when the state-of-charge of the first electric storage device is less than a predetermined high state-of-charge threshold, and the second power supply alone or the first and second power supplies regenerate power when the state-of-charge of the first electric storage device is not less than the predetermined high state-of-charge threshold, and the feeding control is performed such that, the second power supply alone feeds power when the state-of-charge of the second electric storage device is not less than a predetermined low state-of-charge threshold, and the first power supply alone or the first and second power supplies feed power when the state-of-charge of the second electric storage device is less than the predetermined low state-of-charge threshold.

At least one of the electric storage devices contained in the above mentioned power supplies comprises an electric double layer capacitor.

A hybrid-powered electric automobile is equipped with two sets of power supplies which have electric storage devices respectively, wherein one electric storage device is always maintained nearly in an empty condition and the other electric storage device is always maintained nearly in a fully charged condition.

When feeding is required, sufficient power can be fed by the power supply having the electric storage device whose state-of-charge is not less than the high state-of-charge threshold. At a time of acceleration, this can ensure that power is fed to the motor-generator so as to give assistance for acceleration. And when the automobile is in a stopped state, this can also ensure that the auxiliary equipment is operated for a long time.

When regeneration power is required, the power supply having the electric storage device whose state-of-charge is not more than the low state-of-charge threshold can be regenerated with sufficient power. For example, when regeneration power is required for application of a regenerative brake, the regenerative brake can be used since the electric storage device has a margin of regeneration by keeping the state-of-charge of one electric storage device low. The capability of making full use of the regenerative brake also yields improvement in energy recovery. Moreover, energy regeneration can take place without missing an opportunity for regeneration, and regenerative energy is also used to operate the auxiliary equipment. This allows a reduction in the engine driving time of the vehicle, thus improving fuel efficiency.

The capability of making full use of the regenerative brake yields a corresponding reduction in loads on other braking devices, thus extending the lifetime thereof.

The power supply with an electric storage device of high state-of-charge is also connected to the auxiliary equipment, such as a motor-driven hydraulic power unit or a motor-driven compressor, and is able to feed power to the equipment for a long time. This enables operation of the equipment with the engine stopped, thus achieving prevention of exhaust gas and noise reduction.

When an electric double layer capacitor is used as an electric storage device , size reduction and extending the life time of the power supply can be realized. Since an electric double layer capacitor is known as a large-capacity capacitor in spite of its small size and undergoes little deterioration even after frequent repetition of discharge and charge comparing to the battery.

The power supply is hardly likely to feed power in excess of the maximum feeding power allowance and regenerative power is set so as not to exceed the maximum regenerative power allowance. Consequently the lifetime of the power supply can be extended.

Brief Description of the Drawing

Fig. 1 is a block diagram showing a vehicle power supply in the invention;
Fig. 2 is a plot of state-of-charge range, which is utilized to determine assignment of discharge at a time of discharge;
Fig. 3 is a plot of state-of-charge range, which is utilized to determine assignment of regeneration at a time of regeneration;
Fig. 4 is a flowchart for explaining discharge control in the invention;
Fig. 5 is a flowchart for explaining regeneration control in the invention;
Fig. 6 is a plot showing one example of a map which is used to determine discharge power from an electric storage device (B) 4; and
Fig. 7 is a plot showing one example of a map, which is used to determine regenerative power to an electric storage device (A) 3.

Best Mode for practicing the Invention

An embodiment of the invention will be described in detail below with reference to the drawings.

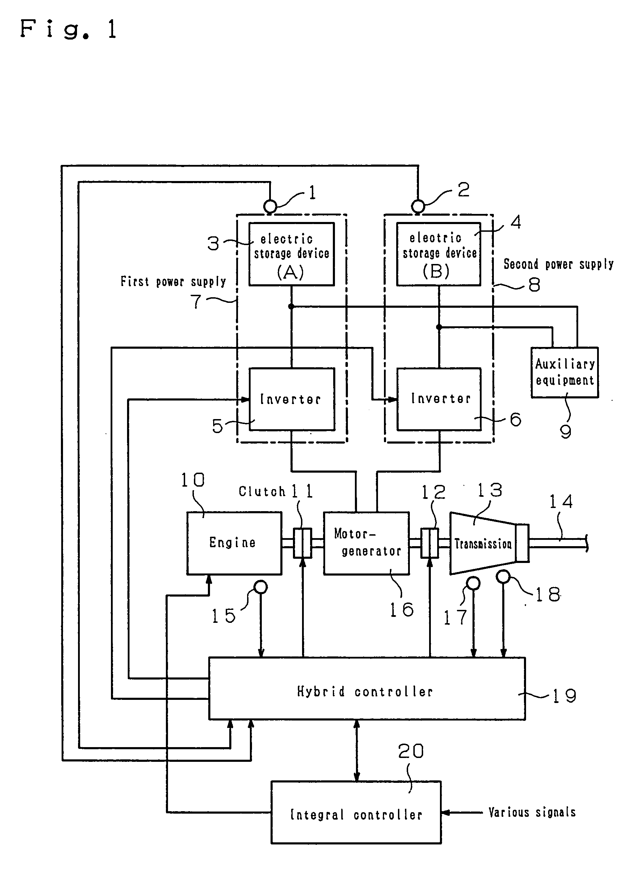

Fig. 1 is a block diagram showing a vehicle power supply in the invention. In Fig. 1, numerals 1 and 2 each denote a state-of-charge detecting sensor, numeral 3 denotes an electric storage device (A), numeral 4 denotes an electric storage device (B), numerals 5 and 6 each denote an inverter, numeral 7 denotes a first power supply, numeral 8 denotes a second power supply, numeral 9 denotes auxiliary equipment, numeral 10 denotes an engine, numerals 11 and 12 each denote a clutch, numeral 13 denotes a transmission, numeral 14 denotes a propeller shaft, numeral 15 denotes an engine speed sensor, numeral 16 denotes a motor-generator, numeral 17 denotes a gear change sensor, numeral 18 denotes a vehicle speed sensor, numeral 19 denotes a hybrid controller, and numeral 20 denotes an integral controller.

The engine 10 and the motor-generator 16 are coupled to each other via the clutch 11 which is connectable and disconnectable, and the motor-generator 16 and the transmission 13 are coupled to each other via the clutch 12 which is connectable and disconnectable. Each of the clutches 11 and 12 is appropriately engaged or disengaged in accordance with an electric signal, as needed. When the engine 10 is used to drive a vehicle, each of the clutches 11 and 12 is engaged so that the motor-generator 16 serves as a flywheel (that is, the motor-generator 16 serves as neither a motor nor a generator).

In the invention, two sets of the first and second power supplies 7 and 8 are provided to serve as the power supply which discharges power into the motor-generator 16 and regenerates power from the motor-generator 16. The first power supply 7 comprises the inverter 5 and the electric storage device (A) 3, and the second power supply 8 comprises the inverter 6 and the electric storage device (B) 4.

When the first power supply 7 feeds power to the motor-generator 16 (that is, when discharge takes place), the inverter 5 converts a direct current of the electric storage device (A) 3 into an alternating current, which is then fed to the motor-generator 16. In this instance, the motor-generator 16 serves as the motor.

When the motor-generator 16 regenerates power into the electric storage device (A) 3(that is, when charge takes place), the inverter 5 converts an alternating current generated by the motor-generator 16 into a direct current, which is then regenerated into the electric storage device (A) 3. In this instance, the motor-generator 16 serves as the generator.

Power feeding from the second power supply 8 to the motor-generator 16 and regeneration from the motor-generator 16 to the second power supply 8 are performed similarly.

Such a constitution is employed that feeding power from the electric storage device (A) 3 and the electric storage device (B) 4 are conducted to not only the motor-generator 16 but also the auxiliary equipment 9. The auxiliary equipment 9 refers to, for example, a compressor for an air conditioner, a compressor for a refrigerator, a pump for a power steering wheel, a hydraulic power unit driving apparatus for a garbage truck, a mixture unit apparatus and the like.

The hybrid controller 19 is a controller to perform hybrid control (more specifically, perform control so as to properly use the engine 10 or the motor-generator 16), and the integral controller 20 is a controller to comprehensibly control the vehicle. These controllers are each configured computationally having a memory and a central processing unit (CPU).

Various signals that post information about the vehicle are inputted to the integral controller 20. Inputted information to the hybrid controller 19 are the state-of-charge of the electric storage device (A) 3 from the state-of-charge detecting sensor 1 and the state-of-charge of the electric storage device (B) 4 from the state-of-charge detecting sensor 2. Signals such as detection signals from the engine speed sensor 15, the gear change sensor 17, and the vehicle speed sensor 18 are also inputted to the hybrid controller 19.

The integral controller 20 and the hybrid controller 19 exchange required information with each other. Control signals for causing the motor-generator 16 to serve as a motor or as a generator are transmitted from the hybrid controller 19 to the inverters 5 and 6. Connection/disconnection control signals to the clutch 11 and 12 are also transmitted from the hybrid controller 19.

The vehicle power supply of the invention is provided with two sets of the power supplies. While referring to the state-of-charge of each of the electric storage devices contained in the power supplies, the vehicle power supply controls the manner in which feeding (or discharge) and regeneration (or charge) takes place, thereby preventing a regenerative brake from becoming unusable. Such control will be described below.

(1) Feeding (or discharge) control --- Feeding power allocation

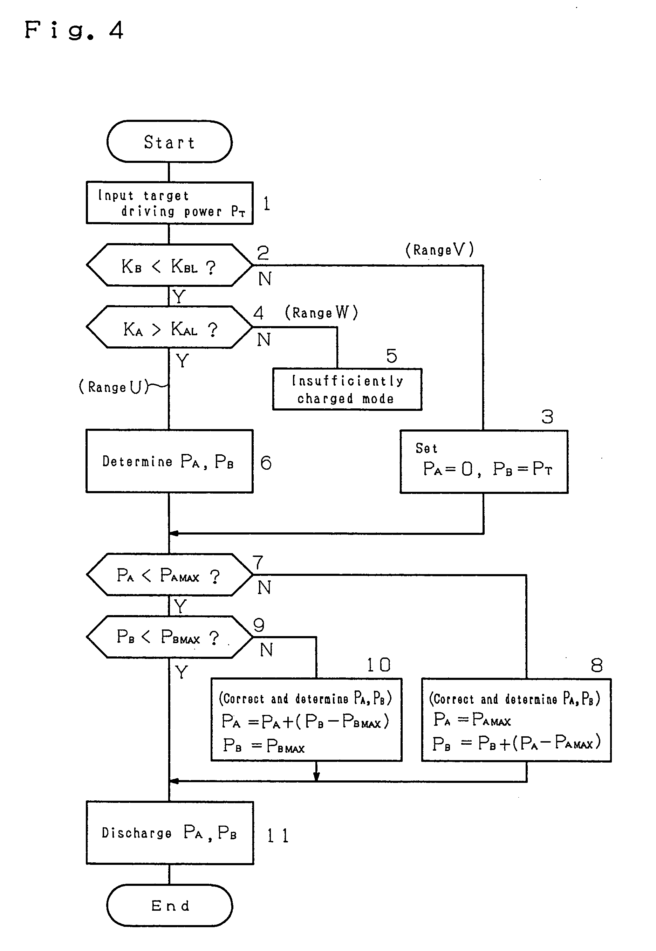

Fig. 4 is a flowchart for explaining power feeding control in the invention. The flow of control repeatedly takes place within the hybrid controller 19 at intervals of extremely short time.

(Step 1)

A target driving power $P_T$ is inputted. The target driving power $P_T$ is given by using a predefined map or the like according to what kind of state the vehicle is in (for example, whether the vehicle is in a starting state).

(Step 2)

Reference is made to the state-of-charge $K_B$ of the electric storage device (B) 4 so as to determine whether or not the state-of-charge $K_B$ is less than a predetermined low state-of-charge threshold $K_{BL}$ (such as, 20 %). The $K_{BL}$ value can be appropriately set.

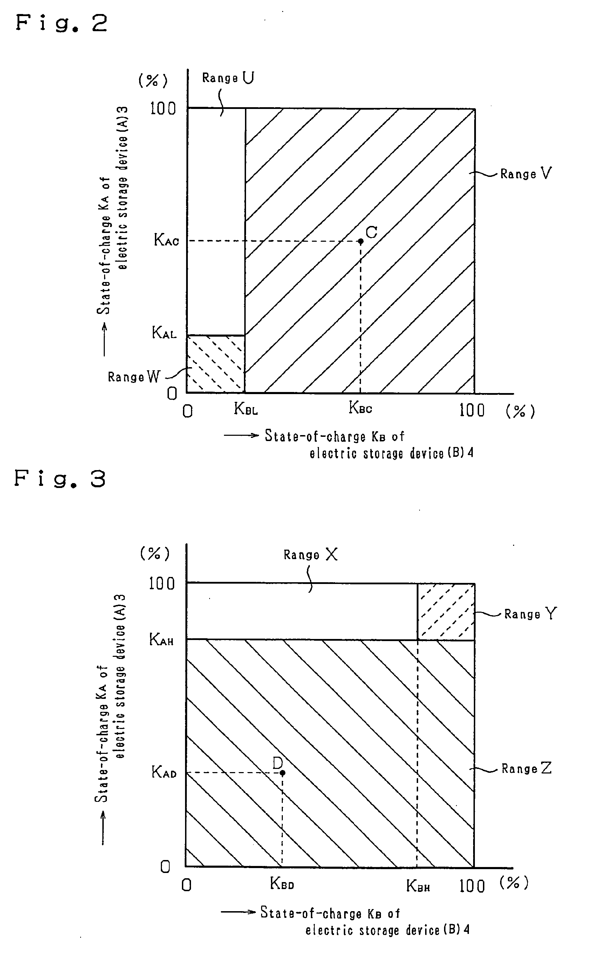

Fig. 2 is a plot of state-of-charge range, which is utilized to determine allocation of discharge, more specifically to what degree each of the electric storage devices (A) 3 and (B) 4 should be discharged when the first and second power supplies 7 and 8 feed power to the motor-generator 16, or in other words when the electric storage device s (A) 3 and (B) 4 undergo discharging. In Fig. 2, the vertical axis indicates the state-of-charge $K_A$ of the electric storage device (A) 3, and the horizontal axis indicates the state-of-charge $K_B$ of the electric storage device (B) 4. $K_{BL}$ represents the low state-of-charge threshold (such as, 20%) appropriately set, as mentioned above. The $K_{BL}$ value is set to such a low value that the electric storage device does not reach a fully charged state even if the electric storage device is charged with regenerative power which is produced when the vehicle goes down a commonly encountered long slope.

The plot of Fig. 2 is divided into ranges as given below, each of which is subjected to feeding control in the following steps as will be hereinafter described. The ranges are as follows:

a range U, which is the range where $K_A$ is more than $K_{AL}$ ($K_A > K_{AL}$) and $K_B$ is less than $K_{BL}$ ($K_a < K_{BL}$);
a range V, which is the range where $K_B$ is more than $K_{BL}$ ($K_B > K_{BL}$); and a range W, which is the range where $K_A$ is less than $K_{AL}$ ($K_A < K_{AL}$) and $K_B$ is less than $K_{BL}$ ($K_B < K_{BL}$).

For example, a state in which the state-of-charge $K_A$ of the electric storage device (A) 3 is equal to $K_{AC}$ ($K_A = K_{AC}$) and the state-of-charge $K_B$ of the electric storage device (B) 4 is equal to $K_{BC}$ ($K_B = K_{BC}$) is indicated by a point C in Fig. 2, and the state belongs to the range V.

(Step 3)

A state in which the state-of-charge $K_B$ of the electric storage device (B) 4 is not less than the low state-of-charge threshold $K_{BL}$ (N0 in step 2) belongs to the range V of Fig. 2. In this case, discharge power $P_A$ from the electric storage device (A) 3 is set to 0, and discharge power $P_B$ from the electric storage device (B) 4 is set to the target driving power $P_T$. Each discharge power is set as mentioned above because it is desired that the electric storage device (B) 4 keeps the state-of-charge equal to or less than the low state-of-charge threshold $K_{BL}$ where possible. More specifically, the electric storage device (B) 4 is required to keep the state-of-charge low in order to prevent the occurrence of situations where the regenerative brake is unusable that is when the electric storage device is in a fully charged condition. When the state-of-charge $K_B$ of the electric storage device (B) 4 is not less than the low state-of-charge threshold $K_{BL}$, it is therefore desirable that the electric storage device (B) 4 be fully discharged first. Accordingly, the overall target driving power $P_T$ is discharged from the electric storage device (B) 4.

(Step 4)

Reference is made to the state-of-charge $K_A$ of the electric storage device (A) 3 so as to determine whether or not the state-of-charge $K_A$ is more than a predetermined low state-of-charge threshold $K_{AL}$ (such as, 20 %).

(Step 5)

Control goes to this step when a charged state belongs to the range W. More specifically, both the electric storage devices each have the state-of-charge less than the low state-of-charge threshold, that is, the electric storage devices are in an insufficiently charged condition. In this case, only such power as may be supplied by both the electric storage devices can be discharged, so that discharge sufficient to supply the target driving power $P_T$ may not take place.

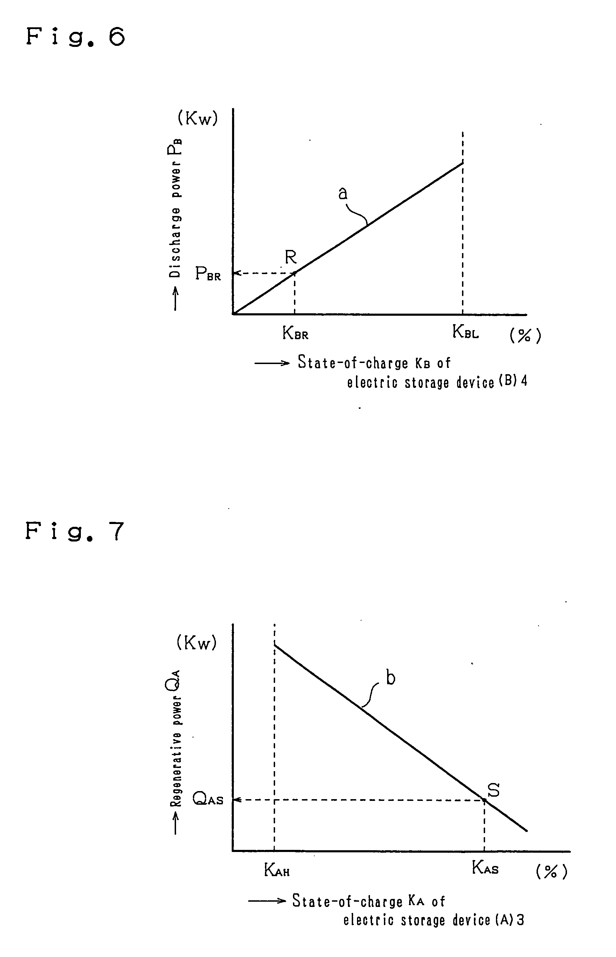

Fig. 6 is a plot showing one example of a map, which is used to determine the discharge power from the electric storage device (B) 4. In Fig. 6, the horizontal axis indicates the state-of-charge $K_B$ of the electric storage device (B) 4, and the vertical axis indicates the discharge power $P_B$ to be discharged from the electric storage device (B) 4. A curve (a) is the curve, which defines the relation between the state-of-charge $K_B$ and the discharge power $P_B$, and R represents a point on the curve (a). For example, when the state-of-charge is equal to $K_{BR}$ less than the low state-of-charge threshold $K_{BL}$, $P_{BR}$ is given for the discharge power to be discharged from the electric storage device (B) 4.

(Step 6)

Control goes to this step when a charged state belongs to the range U. More specifically, the state-of-charge of the electric storage device (B)4 is less than the low state-of-charge threshold $K_{BL}$, whereas the state-of-charge of the electric storage device (A)3 is more than the low state-of-charge threshold $K_{AL}$. In this case, about the same amount of power as the amount of power discharged in step 5 is discharged from the electric storage device (B)4, and the rest is discharged from the electric storage device (A)3.

For example, when $P_{BR}$ is given for the discharge power from the electric storage device (B) 4 as the example shown in Fig. 6 illustrates, the discharge power $P_A$ from the electric storage device (A) 3 is given by the following equation.

$$P_A = \text{target driving power } P_T - P_{BR}$$

(Step 7)

The preceding steps are the steps of tentatively determining the power $P_A$ and power $P_B$ to be discharged from the electric storage device (A) 3 and electric storage device (B) 4, respectively. Steps 7 to 10 are the steps of correcting the determined power.

The maximum power that can be fed by the power supply is limited by itself according to specifications and characteristics of the inverter and the electric storage device (for example, a storage capacity, a maximum current allowance and the like.). Steps 7 to 10 are now executed, provided that the maximum feeding power allowance from the first power supply 7 is $P_{AMAX}$ and the maximum feeding power allowance from the second power supply 8 is $P_{BMAX}$.

In step 7, determination is made as to whether or not the discharge power $P_A$ from the electric storage device (A) 3 which has been tentatively determined in steps 1 to 6 is less than the maximum feeding power allowance $P_{AMAX}$.

(Step 8)

When step 7 determines that the discharge power $P_A$ is not less than the maximum feeding power allowance $P_{AMAX}$, corrections are made on the discharge power $P_A$ and the discharge power $P_B$. More specifically, the value of the discharge power $P_A$ is reduced to $P_{AMAX}$, and the amount of reduction ($P_A - P_{AMAX}$) is added to the discharge power $P_B$ from the electric storage device (B) 4. The new $P_A$ and $P_B$ values determined after correction are expressed as the following equations.

$$P_A = P_{AMAX}$$

$$P_B = P_B + (P_A - P_{AMAX})$$

(Step 9)

When step 7 determines that the discharge power $P_A$ is less than the maximum feeding power allowance $P_{AMAX}$, determination is made as to whether or not the discharge power $P_B$ from the electric storage device (B) 4 which has been tentatively determined in steps 1 to 6 is less than the maximum feeding power allowance $P_{BMAX}$.

(Step 10)

When step 9 determines that the discharge power $P_B$ is not less than the maximum feeding power allowance $P_{BMAX}$, corrections are made on the discharge power $P_A$ and the discharge power $P_B$ in the same manner as step 8. The new $P_A$ and $P_B$ values determined after correction are expressed as the following equations.

$$P_A = P_A + (P_B - P_{BMAX})$$

$$P_B = P_{BMAX}$$

(Step 11)

Control is performed so that the discharge power $P_A$ and discharge power $P_B$ finally determined in the above-described manner may be discharged from the electric storage devices (A) 3 and (B) 4, respectively. The control is such that the electric storage device (B) 4 is fully discharged and the electric storage device (A) 3 is discharged in order to cover a deficiency. Under this control, the electric storage device (B) 4 is almost always kept having a low state-of-charge, thereby ensuring that the regenerative brake is available.

Incidentally, steps 7 to 10 may be omitted from control operation. It is because that the power supply is hardly likely to feed power in excess of the maximum feeding power allowance in view of the structure of the power supply and the like, and these steps are not necessary if the feeding power time seems to be short when the power supply in excess of the maximum feeding power allowance is required.

(2) Regeneration control --- Regenerative power allocation

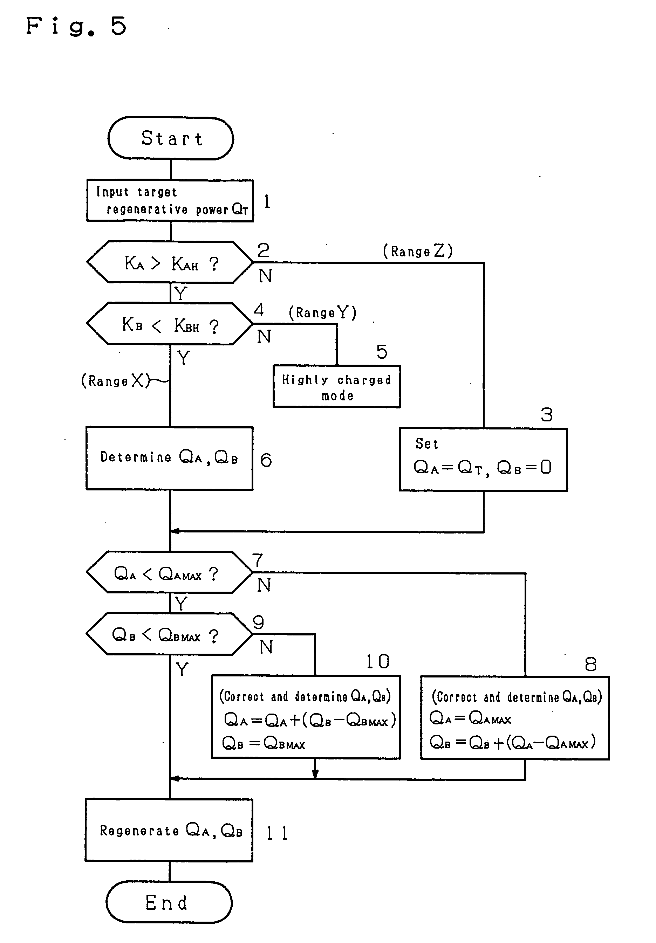

Fig. 5 is a flowchart for explaining regeneration control in the invention. The flow of control repeatedly takes place within the hybrid controller 19 at intervals of extremely short time.

(Step 1)

A target regenerative power $Q_T$ is inputted. The target regenerative power $Q_T$ is given by using a predefined map or the like according to what kind of state the vehicle is in (for example, whether the vehicle is in a decelerating state and at what speed deceleration starts).

(Step 2)

Reference is made to the state-of-charge $K_A$ of the electric storage device (A) 3 so as to determine whether or not the state-of-charge $K_A$ is more than a predetermined high state-of-charge threshold $K_{AH}$ (such as, 80 %). The $K_{AH}$ value can be appropriately set.

Fig. 3 is a plot of state-of-charge range, which is utilized to determine assignment of regeneration (or charge), more specifically to what degree each of the electric storage devices (A) 3 and (B) 4 should be charged when the motor-generator 16 charges power into the electric storage devices (A) 3 and (B) 4 so that the first and second power supplies 7 and 8 regenerate the power or in other words when the electric storage devices (A) 3 and (B) 4 undergo charging. In Fig. 3, the vertical axis indicates the state-of-charge $K_A$ of the electric storage device (A) 3, and the horizontal axis indicates the state-of-charge $K_B$ of the electric storage device (B) 4. $K_{AH}$ represents the high state-of-charge threshold (e.g., 80 % ) appropriately set, as mentioned above. The $K_{AH}$ value is set to such a high value that the electric storage device does not reach such a fully charged state that the electric storage device has no capacity for regenerative power at all.

The plot of Fig. 3 is divided into ranges as given below, each of which is subjected to regeneration control in the following steps as will be hereinafter described. The ranges are as follows:

a range X, which is the range where $K_A$ is more than $K_{AH}$ ($K_A > K_{AH}$ ) and $K_B$ is less than $K_{BH}$ ($K_B < K_{BH}$ );
a range Y, which is the range where $K_A$ is more than $K_{AH}$ ($K_A > K_{AH}$ ) and $K_B$ is more than $K_{BH}$ ($K_B > K_{BH}$ );
and a range Z, which is the range where $K_A$ is less than $K_{AH}$ ($K_A < K_{AH}$).

For example, a state in which the state-of-charge $K_A$ of the electric storage device (A)3 is equal to $K_{AD}$ ($K_A = K_{AD}$) and the state-of-charge $K_B$ of the electric storage device (B) 4 is equal to $K_{BD}$ ($K_B = K_{BD}$ ) is indicated by a point D in Fig.3, and the state belongs to the range Z.

(Step 3)

A state in which the state-of-charge $K_A$ of the electric storage device (A) 3 is not more than the high state-of-charge threshold $K_{AH}$ (N0 in step 2) belongs to the range Z of Fig.3. In this case, regenerative power $Q_A$ to the electric storage device (A) 3 is set to the target regenerative power $Q_T$ , and regenerative power $Q_B$ to the electric storage device (B) 4 is set to 0.

Each regenerative power is set as mentioned above because it is desired that the electric storage device (A) 3 keep the state-of-charge equal to or more than the high state-of-charge threshold $K_{AH}$ where possible so as to give a sufficient assistance for starting or acceleration. When the state-of-charge $K_A$ of the electric storage device (A) 3 is less than the high state-of-charge threshold $K_{AH}$ , it is therefore desirable that the overall regenerative power be assigned to the electric storage device (A) 3. Accordingly, the regenerative power is determined as described above.

(Step 4)

Reference is made to the state-of-charge $K_B$

of the electric storage device (B) 4 so as to determine whether or not the state-of-charge $K_B$ is less than a predetermined high state-of-charge threshold $K_{BH}$ (e. g. , 80%).

(Step 5)

Control goes to this step when a charged state belongs to the range Y. More specifically, both the electric storage devices each have the state-of-charge more than the high state-of-charge threshold, that is, the electric storage devices are in a highly charged condition. In this case, only such power as may be held by both the electric storage devices can be charged, so that charge sufficient to hold the target regenerative power $Q_T$ may not take place.

Fig.7 is a plot showing one example of a map, which is used to determine the regenerative power to the electric storage device (A) 3. In Fig.7, the horizontal axis indicates the state-of-charge $K_A$ of the electric storage device (A) 3, and the vertical axis indicates the regenerative power $Q_A$ that can be charged into the electric storage device (A) 3. A curve (b) is the curve, which defines the relation between the state-of-charge $K_A$ and the regenerative power $Q_A$ , and S represents a point on the curve (b). For example, when the state-of-charge is equal to $K_{AS}$ more than the high state-of-charge threshold $K_{AH}$, $Q_{AS}$ is given for the regenerative power to be charged into the electric storage device (A) 3.

(Step 6)

Control goes to this step when a charged state belongs to the range X. More specifically, the state-of-charge of the electric storage device (B) 4 is less than the high state-of-charge threshold $K_{BH}$, whereas the state-of-charge of the electric storage device (A) 3 is more than the high state-of-charge threshold $K_{AH}$. In this case, about the same amount of power as the amount of power charged in step 5 is charged into the electric storage device (A) 3, and the rest is charged into the electric storage device (B) 4.

For example, when $Q_{AS}$ is given for the regenerative power to the electric storage device (A) 3 as the example shown in Fig.7 illustrates, the regenerative power $Q_B$ to the electric storage device (B) 4 is given by the following equation.

$$Q_B = \text{target regenerative power } Q_T - Q_{AS}$$

(Step 7)

The preceding steps are the steps of tentatively determining the power $Q_A$ and power $Q_B$ to be charged into the electric storage device (A) 3 and the electric storage device (B) 4, respectively. Steps 7 to 10 are the steps of correcting the determined power.

The maximum power that can be regenerated by the power supply is limited by itself according to specifications and characteristics of the inverter and the electric storage device (e.g., a storage capacity, a maximum current allowance, etc.). Steps 7 to 10 are now executed, provided that the maximum regenerative power allowance to the first power supply 7 is $Q_{AMAX}$ and the maximum regenerative power allowance to the second power supply 8 is $Q_{BMAX}$.

In step 7, determination is made as to whether or not the regenerative power $Q_A$ to the electric storage device (A) 3 which has been tentatively determined in steps 1 to 6 is less than the maximum regenerative power allowance $Q_{AMAX}$.

(Step 8)

When step 7 determines that the regenerative power $Q_A$ is not less than the maximum regenerative power allowance $Q_{AMAX}$, corrections are made on the regenerative power $Q_A$ and the regenerative power $Q_B$. More specifically, the value of the regenerative power $Q_A$ is reduced to $Q_{AMAX}$, and the amount of reduction ($Q_A - Q_{AMAX}$) is added to the regenerative power $Q_B$ to the electric storage device (B) 4. The new $Q_A$ and $Q_B$ values determined after correction are expressed as the following equations.

$$Q_A = Q_{AMAX}$$

$$Q_B = Q_B + (Q_A - Q_{AMAX})$$

(Step 9)

When step 7 determines that the regenerative power $Q_A$ is less than the maximum regenerative power allowance $Q_{AMAX}$, determination is made as to whether or not the regenerative power $Q_B$ to the electric storage device (B) 4 which has been tentatively determined in steps 1 to 6 is less than the maximum regenerative power allowance $Q_{BMAX}$.

(Step 10)

When step 9 determines that the regenerative power $Q_B$ is not less than the maximum regenerative power allowance $Q_{BMAX}$, corrections are made on the regenerative power $Q_A$ and the regenerative power $Q_B$ in the same manner as step 8. The new $Q_A$ and $Q_B$ values determined after correction are expressed as the following equations.

$$Q_A = Q_A + (Q_B - Q_{BMAX})$$

$$Q_B = Q_{BMAX}$$

(Step 11)

Control is performed so that the regenerative power $Q_A$ and regenerative power $Q_B$ finally determined in the above-described manner may be charged into the electric storage devices (A) 3 and the electric storage device (B) 4, respectively. The control is such that the electric storage device (A) 3 is fully charged and the electric storage device (B) 4 is charged with the remainder. Under this control, the electric storage device (A) 3 is almost always kept having a high state-of-charge, thereby ensuring that power can be fed to the motor-generator 16 or the auxiliary equipment 9.

Incidentally, steps 7 to 10 may be omitted from control operation. The reason is as follows. It is because that hardly likely to regenerate power in excess of the maximum regenerative power allowance in view of the structure of the power supply and the like, and these steps are not necessary if the regenerating time seems to be short when the regeneration in excess of the maximum regenerative power allowance is required.

A vehicle equipped with the above-described vehicle power supply enables the following driving as an example.

At a starting time of the vehicle, the motor-generator 16 alone is used to obtain driving power of the vehicle, so that the vehicle can achieve quiet smooth starting. When the vehicle reaches a running state that permits the engine to be efficiently driven, the engine 10 is started, and power is stopped from being fed to the motor-generator 16, or the motor-generator 16 is placed in an auxiliary driven state. When the electric storage device (A) 3 enters an insufficiently charged state, the motor-generator 16 is appropriately allowed to serve as the generator.

At a time of deceleration of the vehicle, regenerative power produced by the regenerative brake is first charged into the electric storage device (B) 4. Since the electric storage device (B) 4 is maintained nearly in an empty condition, full use can be made of the regenerative brake, and moreover, sufficient energy can be regenerated. The regenerative power is also used to operate the auxiliary equipment.

The description is now given by taking a garbage truck as an example. The garbage truck is provided with a motor-driven hydraulic power unit for compressing garbage. When the truck arrives at a garbage collection pit, the engine is stopped, and the power supply is used to feed power to the hydraulic power unit and thus operate the unit. Thus, the truck produces neither engine noise nor exhaust gas in a residential area near the garbage collection pit.

The description is then given by taking a refrigerator truck as an example. The refrigerator truck is provided with a motor-driven refrigerator compressor.

When the truck waits at traffic lights or a driver takes a break at mealtimes, the engine is stopped, and the power supply is used to feed power to a refrigerator and thus operate the refrigerator.

In this instance, the engine is frequently stopped and regenerative power is used with the engine stopped, so that fuel efficiency can be improved.

Although the exemplary vehicle power supply including one motor-generator is shown in Fig. 1, the vehicle power supply is not limited to this configuration. Any configuration will do so long as it can serve the function that is the same as or equivalent to the function of the motor-generator. For example, the vehicle power supply may include one motor and one generator, or may include two motor-generators. Alternatively, the generator may be replaced by a device for electric power generation only, such as a fuel battery.

## Claims

1. A vehicle power supply which feeds power to a motor-generator and an auxiliary equipment or regenerates power from the motor-generator, comprising:

   a first power supply having a first electric storage device and a first inverter;
   a second power supply having a second electric storage device and a second inverter;
   state-of-charge detecting means for detecting the state-of-charge of each of the first and second electric storage devices ; and
   controlling means for performing feeding control or regeneration control on the first and second power supplies in accordance with signals from the state-of-charge detecting means and signals on an operating status of a vehicle, wherein the regeneration control is performed such that the first power supply regenerates power for preference when the state-of-charge of the first electric storage device is less than a predetermined high state-of-charge threshold, and the second power supply regenerates power for preference when the state-of-charge of the first electric storage device is not less than the predetermined high state-of-charge threshold, and the feeding control, the second power supply feeds power for preference when the state-of-charge of the second electric storage device is not less than a predetermined low state-of-charge threshold, and the first power supply feeds power for preference when the state-of-charge of the second electric storage device is less than the predetermined low state-of-charge threshold.

2. A vehicle power supply which feeds power to a motor-generator and an auxiliary equipment or regenerates power from the motor-generator, comprising:

   a first power supply having a first electric storage device and a first inverter;
   a second power supply having a second electric storage device and a second inverter;
   state-of-charge detecting means for detecting the state-of-charge of each of the first and second electric storage devices ; and
   controlling means for performing feeding control or regeneration control on the first and second power supplies in accordance with signals from the state-of-charge detecting means and signals on an operating status of a vehicle, wherein the regeneration control is performed such that, the first power supply alone regenerates power when the state-of-charge of the first electric storage device is less than a predetermined high state-of-charge threshold, and the second power supply alone or the first and second power supplies regenerate power when the state-of-charge of the first electric storage device is not less than the predetermined high state-of-charge threshold, and the feeding control is performed such that, the second power supply alone feeds power when the state-of-charge of the second electric storage device is not less than a predetermined low state-of-charge threshold, and the first power supply alone or the first and second power supplies feed power when the state-of-charge of the second electric storage device is less than the predetermined low state-of-charge threshold.

3. A vehicle power supply according to claim 1 or 2, wherein at least one of the electric storage devices contained in the power supplies comprises an electric double layer capacitor.

Fig. 1

Fig. 2

Fig. 3

Fig. 4

```
            ┌─────────────┐
            │    Start    │
            └──────┬──────┘
                   │
        ┌──────────┴──────────┐
        │ Input target        │  1
        │ driving power Pᴛ     │
        └──────────┬──────────┘
                   │
           ╱───────┴───────╲      2      (Range V)
          ⟨  Kᴮ  <  Kᴮᴸ ?   ⟩────────────────────────┐
           ╲───────┬───────╱  N                       │
                   │ Y                                 │
           ╱───────┴───────╲      4    (Range W)       │
          ⟨  Kᴬ  >  Kᴬᴸ ?   ⟩──────────┐               │
           ╲───────┬───────╱  N        │               │
                   │ Y                 │               │
      (Range U)    │         ┌─────────┴──────┐ 5      │
                   │         │ Insufficiently  │       │
                   │         │ charged mode    │       │
                   │         └────────────────┘        │
                   │                                    │
        ┌──────────┴──────────┐         ┌──────────────┴──────┐ 3
        │ Determine Pᴬ, Pᴮ    │ 6       │ Set                 │
        └──────────┬──────────┘         │ Pᴬ = 0 ,  Pᴮ = Pᴛ   │
                   │                    └──────────┬──────────┘
                   │◄──────────────────────────────┘
                   │
           ╱───────┴───────╲      7
          ⟨ Pᴬ < Pᴬᴹᴬˣ ?   ⟩───────────────────────────────┐
           ╲───────┬───────╱  N                             │
                   │ Y                                       │
           ╱───────┴───────╲      9                          │
          ⟨ Pᴮ < Pᴮᴹᴬˣ ?   ⟩──────────┐                      │
           ╲───────┬───────╱  N        │                     │
                   │ Y                 │                     │
                   │        ┌──────────┴────────────┐ 10     │
                   │        │(Correct and determine │       ┌┴──────────────────────┐ 8
                   │        │ Pᴬ, Pᴮ)               │       │(Correct and determine │
                   │        │ Pᴬ = Pᴬ + (Pᴮ − Pᴮᴹᴬˣ) │       │ Pᴬ, Pᴮ)               │
                   │        │ Pᴮ = Pᴮᴹᴬˣ            │       │ Pᴬ = Pᴬᴹᴬˣ            │
                   │        └──────────┬────────────┘       │ Pᴮ = Pᴮ + (Pᴬ − Pᴬᴹᴬˣ) │
                   │                   │                    └──────────┬────────────┘
                   │◄──────────────────┴───────────────────────────────┘
        ┌──────────┴──────────┐
        │ Discharge Pᴬ, Pᴮ    │ 11
        └──────────┬──────────┘
                   │
            ┌──────┴──────┐
            │    End      │
            └─────────────┘
```

Fig. 5

```
                        ┌──────────────┐
                        │    Start     │
                        └──────┬───────┘
                               │
                    ┌──────────┴──────────┐
                    │ Input target        │  1
                    │ regenerative power Qᴛ│
                    └──────────┬──────────┘
                               │
                          ╱────┴────╲        2    (Range Z)
                      ───┤ Kᴀ > Kᴀʜ ?├───────────────────────────┐
                          ╲────┬────╱    N                        │
                               │ Y                                │
                          ╱────┴────╲        4    (Range Y)       │
                      ───┤ Kʙ < Kʙʜ ?├──────────┐                 │
                          ╲────┬────╱    N       │                │
          (Range X)            │ Y              │                │
                               │         ┌──────┴──────┐  5       │
                               │         │ Highly charged│        │
                               │         │    mode      │        │
                               │         └─────────────┘         │
                    ┌──────────┴──────────┐       ┌──────────────┴──┐  3
                    │ Determine Qᴀ, Qʙ    │ 6     │ Set             │
                    │                     │       │ Qᴀ=Qᴛ, Qʙ=0     │
                    └──────────┬──────────┘       └──────────┬──────┘
                               │                             │
                               │◄────────────────────────────┘
                               │
                          ╱────┴────╲        7
                      ───┤Qᴀ < Qᴀᴍᴀx?├─────────────────────────────┐
                          ╲────┬────╱    N                          │
                               │ Y                                  │
                          ╱────┴────╲        9                      │
                      ───┤Qʙ < Qʙᴍᴀx?├──────┐                       │
                          ╲────┬────╱    N   │                      │
                               │ Y           │                      │
                               │      ┌──────┴───────────┐ 10  ┌────┴──────────────┐ 8
                               │      │(Correct and       │    │(Correct and        │
                               │      │ determine Qᴀ,Qʙ)  │    │ determine Qᴀ,Qʙ)   │
                               │      │ Qᴀ=Qᴀ+(Qʙ−Qʙᴍᴀx)  │    │ Qᴀ=Qᴀᴍᴀx           │
                               │      │ Qʙ=Qʙᴍᴀx          │    │ Qʙ=Qʙ+(Qᴀ−Qᴀᴍᴀx)   │
                               │      └──────┬───────────┘    └────┬──────────────┘
                               │◄────────────┘─────────────────────┘
                               │
                    ┌──────────┴──────────┐
                    │ Regenerate Qᴀ, Qʙ   │ 11
                    └──────────┬──────────┘
                               │
                        ┌──────┴───────┐
                        │     End      │
                        └──────────────┘
```

Fig. 6

Fig. 7